# EUROPEAN PATENT APPLICATION

(11) **EP 4 465 373 A1**
(43) Date of publication of application: **20.11.2024**
(21) Application number: 23898213.6
(22) Date of filing: 24.11.2023
(51) Int. Cl.: H01M 4/04, F26B 13/10, F26B 21/10, F26B 25/06

(54) **ELECTRODE DRYING APPARATUS AND ELECTRODE DRYING METHOD USING SAME**

(30) Priority: 30.11.2022 KR 20220163998
(71) Applicant: LG Energy Solution, Ltd., Seoul 07335 (KR)
(72) Inventor: CHOI, Soon Sik, Daejeon 34122 (KR); KWON, Oh Cheol, Daejeon 34122 (KR); KIM, Ji Hwan, Daejeon 34122 (KR); LEE, Jeong Won, Daejeon 34122 (KR)
(74) Representative: Plasseraud IP
(86) International application number: PCT/KR2023/019102
(87) International publication number: WO 2024/117682

(57) **Abstract**

An electrode drying device includes: a drying chamber having an inlet for receiving the electrode substrate on one side and an outlet for discharging the electrode substrate on other side; a piston rod positioned inside the drying chamber, extending upwardly and downwardly to press against both end portions in the width direction of an electrode substrate; a cylinder for moving a piston rod up and down in the thickness direction of the electrode substrate; and a plate coupled to an end facing the electrode substrate of the piston rod, and extending in a direction perpendicular to the width direction of the electrode substrate, so that even, the piston rod presses on the two end portions to suppress the bending phenomenon of the two end portions, and the plate coupled with the piston rod blocks the hot air applied to the two end portions to prevent excessive drying by hot air.

## Description

### [Technical Field]

This application claims the benefit of priority from Korean Patent Application Serial No. 10-2022-0163998, filed on Nov. 30, 2022, the disclosure of which is incorporated herein by reference in its entirety.

The present invention relates to an electrode drying device and an electrode drying method using the same.

### [Background Technology of the Invention]

Recently, due to the depletion of fossil fuels, the price of energy sources is rising, environmental pollution is becoming a growing concern, and the need for eco-friendly alternative energy sources is becoming an indispensable factor for future life. Therefore, research on various power generation technologies such as nuclear power, solar power, wind power, and tidal power is ongoing, and power storage devices for more efficient use of the energy generated are also of great interest.

In particular, the demand for batteries as an energy source is increasing rapidly as technology develops and demand for mobile devices increases, and research is being conducted on batteries that can meet various needs.

In terms of battery shape, there is a high demand for prismatic and pouch-type secondary batteries, which can be applied to products such as mobile phones due to their thin thickness, and in terms of materials, there is a high demand for lithium secondary batteries such as lithium-ion batteries and lithium-ion polymer batteries, which have advantages such as high energy density, discharge voltage, and output stability.

Typically, these secondary batteries are configured with an electrode assembly including a positive electrode, a negative electrode, and a separator disposed between them embedded inside the battery case, with positive and negative tabs welded to the two electrode and sealed to expose them to the outside of the battery case. These electrode tabs are electrically connected via contacts with an external device, and the secondary battery is powered to or from the external device via the electrode tabs.

Meanwhile, to manufacture electrodes for secondary batteries, an electrode composite containing a mixture of electrode active materials, binders, and solvents is coated and dried on a current collector. The current collector applied with the electrode composite is then dried, cut and notched to the required size to produce electrodes for secondary batteries.

During the manufacturing of electrodes, the process of drying the electrode slurry is costly and time-consuming, and the drying process affects the overall efficiency of the electrode manufacturing process.

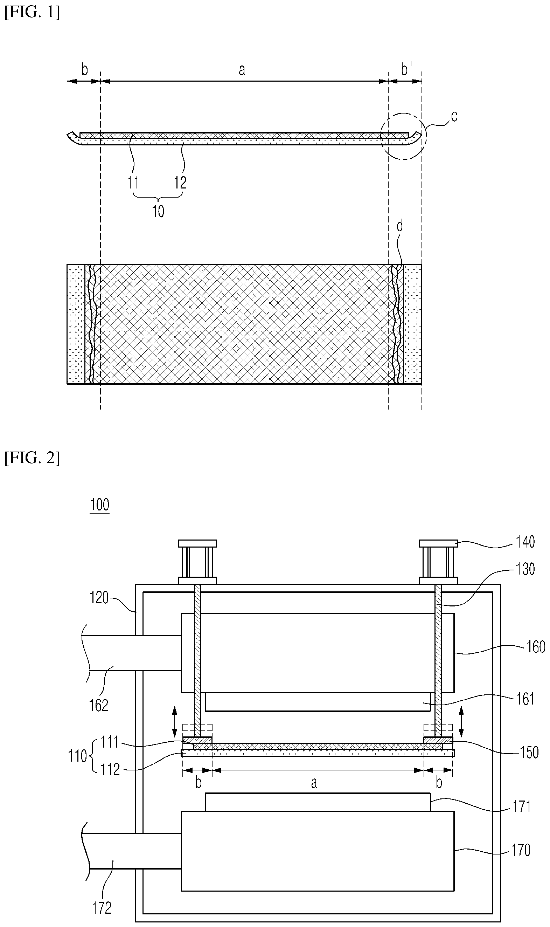

FIG. 1 illustrates a front view and a plan view of an electrode substrate dried by a conventional electrode drying method. Referring to FIG. 1, the electrode substrate 10 is made up of an electrode current collector 12, which is a metal foil, on one side of which an electrode composite is applied to form an electrode composite layer 11. When the electrode substrate 10 is exposed to a high temperature, a difference in properties such as density and stress occurs between the part where the electrode composite is applied and the part where the electrode composite is not applied. Specifically, when the electrode current collector 12, which is a metal material, is heated, the metal expands, whereas when the electrode composite is heated, the solvent volatilizes and contracts.

Furthermore, even in the part where the electrode composite is applied, the sliding phenomenon of the electrode composite occurs on both sides in the width direction of the electrode substrate to which the electrode composite is applied, and the area where the sliding phenomenon occurs has a relatively small amount of electrode composite applied to the electrode current collector compared to the area where the sliding phenomenon does not occur, so that the contraction of the electrode composite can proceed rapidly due to rapid drying. Therefore, when the electrode substrate 10 on which the electrode composite is applied undergoes a drying process the edges of the two ends b, b' in the width direction of the heated electrode substrate 10 may bend (c), i.e., curl or swell may be formed, unlike the center portion (a) excluding the two ends b, b', or in severe cases, cracks (d) may occur around the boundary between the area where the electrode composite is applied and the area where the electrode composite is not applied.

As such, the surface of the electrode substrate that is over-dried by a conventional drying device can develop curls, swells, or cracks that degrade the quality of the electrode surface, ultimately reducing the energy efficiency and safety of the secondary battery.

Therefore, it is necessary to develop an electrode drying device and an electrode drying method using the device that can solve the above problems.

### [Description of the Invention]

### [Technical Problem]

The present invention aims to solve the above-mentioned problems, and to provide an electrode drying device capable of preventing the occurrence of bending or cracking of an electrode surface in the process of drying an electrode with an electrode composite layer formed thereon, and an electrode drying method using the same.

### [Technical Solution]

The present invention provides an electrode drying device. In another example, the electrode drying device of the present invention includes: a drying chamber having an inlet for receiving the electrode substrate on one side and an outlet for discharging the electrode substrate on the other side; and a piston rod positioned inside the drying chamber, extending upwardly and downwardly to press against both end portions in the width direction of an electrode substrate.
In another example, the electrode drying device of the present invention further includes a cylinder for moving a piston rod up and down in the thickness direction of the electrode substrate.

In yet another example, the electrode drying device of the present invention further includes a plate coupled to an end facing the electrode substrate of the piston rod, and extending in a direction perpendicular to the width direction of the electrode substrate.

In a specific example, the plate has structure in which an edge on one side facing the inlet of the drying chamber is bent upwardly by having a curvature.

In another specific example, n (n is an integer greater than or equal to 2) piston rods are disposed in a direction perpendicular to the width direction of the electrode substrate, wherein the n number of piston rods are arranged in a row.

In yet another specific example, based on the direction in which the electrode substrate is being transferred, when the drying chamber is divided into k (where k is an integer between 10 and 30) regions, the piston rod is a structure disposed after a 1/3 point of the k regions forming the drying chamber.

In another example, the electrode drying device of the present invention further includes a control part for controlling the up and down movement of the piston rod by regulating a pressure inside the cylinder.

In yet another example, the electrode drying device of the present invention further includes a sensor part for measuring at least one among a temperature, a dryness, a defectiveness, and an air volume of hot air applied to the electrode substrate; and a data processing part that receives at least one of a temperature, a dryness, a defectiveness, and an air volume of hot air applied to the electrode substrate measured by the sensor part, and determines whether the control part operates if at least one of the received temperature, the dryness, the defectiveness, and the air volume of hot air deviates from a reference value.

In a specific example, the plate is a structure in which the bottom surfaces of the two ends form steps in the width direction of the electrode substrate, wherein among the two ends, the bottom surface of the end facing the center portion of the electrode substrate is higher than the bottom surface of the end facing the opposite direction.

In addition, the plate has a length in the range of 10 to 100 mm in the width direction of the electrode substrate, and a length in the range of 1 to 5 m in a direction perpendicular to the width direction of the electrode substrate.

In addition, the plate has a thickness in the range of 5 to 50 mm.

In yet another specific example, the plate is composed of a metal material having a thermal conductivity (Kcal/Min°C) of 20 or less.

In addition, the plate is a hollow structure in which a cooling fluid conduit through which a cooling fluid flows is formed, one of the n piston rods (where n is an integer greater than or equal to 2) is coupled to the plate, one of which is provided with a cooling fluid supply path capable of supplying cooling fluid to the inside of the plate, and the other of which is provided with a cooling fluid discharge path capable of discharging cooling fluid from the inside of the plate, wherein the cooling fluid conduit is a structure connected to a cooling fluid supply path and a cooling fluid discharge path.

In yet another specific example, the cylinder is selected from a pneumatic cylinder and a hydraulic cylinder.

In addition, the cylinder moves the piston rod up and down within a range of 100 mm.

In one example, the electrode drying device of the present invention further includes: an upper trunk including a nozzle mounted in an upper space within the drying chamber and discharging hot air in a downward direction at a position upwardly spaced from the upper surface of the electrode substrate; and a lower trunk including a nozzle mounted in a lower space within the drying chamber and discharging hot air in an upward direction at a position downwardly spaced from the bottom surface of the electrode substrate.

Meanwhile, an electrode drying method is provided. In an example according to the present invention, the electrode drying method includes: transferring the electrode substrate into the electrode drying device including a drying chamber having an inlet for receiving the electrode substrate on one side and an outlet for discharging the electrode substrate on the other side, and a piston rod positioned inside the drying chamber, extending upwardly and downwardly to press against both end portions in the width direction of an electrode substrate; measuring at least one of a temperature, a dryness, a defectiveness, and an air volume of hot air applied to the area of both end portions in the width direction of the electrode substrate; and pressurizing both end portions in the width direction of the electrode substrate with a piston rod by controlling operation of a cylinder if the measurements fall outside a reference value.

### [Advantageous Effects]

According to an electrode drying device of the present invention and an electrode drying method using the same, a drying chamber is provided with a piston rod inside the drying chamber that pressurizes both end portions of a width direction of an electrode substrate, so that even if the both end portions of the width direction of the electrode substrate being transferred to the drying chamber are excessively dried, the piston rod pressurizes the two end portions of the electrode substrate to suppress the bending phenomenon of the two end portions, and the plate coupled with the piston rod blocks the hot air applied to the two end portions to prevent excessive drying by hot air, thereby preventing deterioration of the electrode quality.

### [Brief Description of the Diagrams]

FIG. 1 is a front view and a plan view illustrating an electrode dried by a conventional electrode drying method.
FIG. 2 is a front view illustrating an electrode drying device according to one example of the present invention.
FIG. 3 is a side view illustrating an electrode drying device according to one example of the present invention.
FIG. 4 is a front view illustrating a plate of an electrode drying device according to a specific example of the present invention.
FIG. 5 is a front view illustrating an electrode drying device according to another example of the present invention.
FIG. 6 is a side view illustrating a plate of an electrode drying device according to another specific example of the present invention.
FIG. 7 is a flowchart illustrating the sequence of an electrode drying method according to one example of the present invention.

### [Best Mode for Carrying out the Invention]

The present invention is subject to various modifications and can have many embodiments, certain of which are described in detail below.

However, this is not intended to limit the present invention to any particular embodiment and is to be understood to include all modifications, equivalents, or substitutions that fall within the scope of the thought and technology of the present invention.

The terms "comprise" or "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

Furthermore, in the present invention, the two end portions of the electrode substrate may refer to a right end portion and a left end portion of the electrode substrate, as one end portion and the other end portion in the width direction of the electrode substrate. The two end portions may include a region where the electrode composite layer is not formed on the electrode current collector (non-coated part) and a region where the electrode composite layer is formed (coated part), and may refer to a region where the electrode substrate is bent in an upward direction during the drying process of the electrode substrate, or where a crack is formed thereby. Meanwhile, the center region of the electrode substrate may mean the remaining region excluding the above two end regions.

The present invention is described in detail below.

The present invention provides an electrode drying device and an electrode drying method using the same.

In general, there are differences in physical properties such as density and stress between regions on the electrode current collector where the electrode composite layer is formed and regions where the electrode composite layer is not formed, and even in regions where the electrode composite layer is formed, depending on the amount of electrode composite applied. When an electrode with an electrode composite layer is dried using a conventional drying device, the edges of the two end portions of the electrode in the width direction are curved upward unlike the center portion, causing a curl or swell to be formed, which may cause cracks on the surface of the electrode. This degradation of the electrode quality ultimately reduces the energy efficiency and safety of the secondary battery. Therefore, the present invention is characterized in that the drying chamber is provided with a piston rod that presses the two end portions of the electrode substrate in the width direction, so that even if the two end portions of the electrode substrate transferred to the drying chamber are excessively dried, the piston rod presses the two end portions to suppress the bending phenomenon of the two end portions, and the plate coupled with the piston rod blocks the hot air applied to the two end portions to prevent excessive drying by hot air, thereby preventing the electrode quality from deteriorating.

Hereinafter, an electrode drying device according to the present invention and an electrode drying method using the same will be described in detail.

In one example, an electrode drying device of the present invention includes: a drying chamber having an inlet through which electrode substrate is introduced on one side and an outlet through which electrode substrate is discharged on the other side; and a piston rod located inside the drying chamber that extends upward and downward to press against two end portions in the width direction of the electrode substrate.

The drying chamber is compartmentalized on all sides into a case, and provides a space for drying the electrode substrate introduced into the casing. The drying chamber is provided with an inlet for introducing the electrode substrate transferred by the transfer roller and an outlet for discharging the electrode substrate, and a heat source is arranged inside the drying chamber to provide thermal energy to dry the electrode composite of the electrode substrate. Generally, the heat source used in the electrode drying process may be hot air, infrared (IR) light, or mid-infrared (MIR) light, and the hot air, IR, or MIR may be applied alone, or two or more of the hot air, IR, and MIR may be applied in combination.

The piston rod, located inside the drying chamber, may be located in an upper region of the surface of the electrode substrate and may move in an upward or downward direction to pressurize the electrode substrate upon descent. The shape of the piston rod may be cylindrical, or may have a shape such as a polygonal column, and is not limited to any particular shape.

Further, the electrode drying device of the present invention may include a cylinder for moving a piston rod up and down in the thickness direction of the electrode substrate. The cylinder provides power to enable the piston rod to perform a linear reciprocating motion. Specifically, a portion of the piston rod may be inserted into the cylinder and, while coupled to the cylinder, the pressure created within the cylinder may cause the piston rod to reciprocate and slide within the cylinder. The cylinder may be fixed to an outer upper surface of the drying chamber and may cause the piston rod to rise or fall in the thickness direction of the electrode substrate. In some cases, the cylinder may be positioned inside the drying chamber, engaged with the outer upper surface of the upper trunk including the heat source . However, in this case, the air pressure formed inside the cylinder due to exposure to a high temperature may be changed by the temperature, making it difficult to accurately control the pressure inside the cylinder. Therefore, a structure in which the main body part is mounted on an outer upper surface of the drying chamber is preferred.

In another example, the electrode drying device of the present invention further includes a plate coupled to an end of the piston rod facing the electrode substrate and extending in a direction perpendicular to a width direction of the electrode substrate. The plate is spaced apart in an upward direction of the electrode substrate while being coupled to the piston rod, and rises or falls with the piston rod when the piston rod is raised or lowered. The plate may be positioned in an upper region of the two end portions in the width direction of the electrode substrate, and as the piston rod descends, the plate descends as well so that the two end portions in the width direction of the electrode substrate may be pressed against the plate.

Further, the plate may be positioned between the upper heat source and the electrode substrate to block some of the thermal energy, such as hot air, infrared radiation, and mid-infrared radiation, released from the upper heat source. Specifically, the plate may adjust a gap between the electrode substrate and the plate to adjust the amount of hot air, infrared, and mid-infrared thermal energy applied to a portion of the electrode substrate facing the plate. For example, if the gap between a portion of the electrode substrate and the plate is large, hot air enters the space between the portion of the electrode substrate and the plate, increasing the amount of hot air applied to the portion, while if the gap between a portion of the electrode substrate and the plate is narrow, hot air enters the space between the portion of the electrode substrate and the plate in a smaller amount, decreasing the amount of hot air applied to the portion. Thus, the amount of heat applied to the electrode substrate can be controlled by adjusting the gap between the plate and the electrode substrate.

In a specific example, the plate of the present invention may have a structure in which one edge positioned toward the inlet of the drying chamber is bent upwardly by having a curvature. If one edge of the plate has a flat shape, when the electrode substrate being transferred by the transfer roller comes into contact with the plate, the electrode substrate will be caught by the edge of the plate and interfere with the movement of the electrode substrate. On the other hand, if one edge of the plate is processed to a round shape, even if the electrode substrate to be transferred comes into contact with the processed plate, there is less interference than when the plate with a plat structure comes into contact with the electrode substrate, and smoother transfer of the electrode substrate is possible. Optionally, the plate may have an upwardly curved structure with not only one edge of the plate disposed toward the inlet of the drying chamber, but also the other edge disposed toward the outlet of the drying chamber having a curvature.

In another specific example, the piston rod of the present invention may be arranged in a structure in which n (n is an integer greater than or equal to 2) piston rods are arranged in a direction perpendicular to the width direction of the electrode substrate, and the n piston rods are arranged side by side. In this case, each of the n piston rods may be coupled with one plate, and two to four piston rods arranged sequentially may be coupled with one plate. As the number of piston rods coupled to the plate increases, the plate can be firmly coupled to the piston rods, thereby increasing structural stability.

In another example, in an electrode drying device according to the present invention, when dividing the drying chamber into k regions (wherein k is an integer between 10 and 30) based on the direction in which the electrode substrate is transferred, the piston rod may be of a structure that is disposed after a 1/3 point of the k regions forming the drying chamber. For example, when dividing the drying chamber into 16 regions in the direction in which the electrode substrate is transferred, by the time the electrode substrate passes through the 6th to 8th region or the 7th to 9th region, the solvent contained in the electrode composite layer may have evaporated to a certain extent, causing the two end portions in the width direction of the electrode substrate to bend or crack. Therefore, one or more piston rods can be arranged after the 6th to 8th region or the 7th to 9th region where the defect of the electrode substrate occurs, so that if bending occurs at two end portion the width direction of the electrode substrate, the plate can be pressed by the coupled piston rod to force the bent portion to straighten, or if the bending has not yet occurred at two end portions, the electrode substrate and the plate can be positioned so that the electrode substrate and the plate are in contact to prevent the electrode substrate from bending even if it is overdried.

Meanwhile, if the piston rod is disposed before a 1/3 point of the drying chamber divided into the k regions, there is a problem that solvent remains in the electrode composite layer, causing the electrode composite to be smeared on the plate when the plate comes into contact with the electrode substrate, so it is preferable that the piston rod is disposed after a 1/3 point of the k regions.

In another example, the electrode drying device according to the present invention further includes a control part for controlling the upward and downward movement of the piston rod by regulating the pressure inside the cylinder. The control part may increase or decrease the pressure generated inside the cylinder to increase or decrease the elongation, i.e. the stroke, of the piston rod inserted inside the cylinder. For example, a target value of the pressure inside the cylinder or a target value of the stroke of the piston rod may be input to the control part, and the control part controls the operation of the cylinder such that the pressure inside the cylinder is increased or decreased according to the input information. In other words, the control part is able to control the range of up and down movement of the piston rod by controlling the operation of the cylinder.

In yet another example, the electrode drying device according to the present invention further includes a sensor part for measuring at least one of a temperature, a dryness, a defectiveness, and an air volume of hot air applied to the electrode substrate. The sensor part is provided with a sensor capable of detecting a surface condition of the electrode substrate, wherein the sensor may be located on an upper region of the electrode surface. Preferably, the sensor part may include one or more sensors for sensing at least one target point on an imaginary axis parallel to the width direction of the electrode substrate, wherein the one or more sensors may sense at least one of temperature, dryness, defectiveness, and air volume of hot air applied to the point at a particular point in the width direction of the electrode substrate at two end portions and at the center portion. The dryness may be a dryness amount or a dryness rate, and the defectiveness may mean a degree of bending or a degree of cracking of the electrode substrate. The temperature, the dryness, and the air volume of hot air applied to the point may be indirect information for determining whether the electrode substrate at the measurement point is over-dried, and the defectiveness may be direct information for determining the defect caused by the over-drying of the electrode substrate, meaning the degree of bending or cracking on the surface of the electrode substrate. The information detected by the sensor may be numerically detected by the sensor part.

Meanwhile, the sensor part is disposed inside the drying chamber and is at high risk of being exposed to high temperature, and the sensor part exposed to high temperature may cause malfunction or failure of the device. To prevent this, the outer casing of the sensor part may be covered with a cooling jacket, or a cooling fan may be provided at a location adjacent to the sensor part to prevent the sensor part from overheating, as necessary.

In yet another example, the electrode drying device according to the present invention may further include a data processing part that determines whether the control part operates by receiving at least one among the temperature, dryness, defectiveness, and the air volume of hot air applied to the electrode substrate measured by the sensor part. The data processing part may determine whether the control part operates if at least one among the temperature, dryness, defectiveness, and air volume of hot air received from the sensor part deviates from a reference value. The reference value means a normal range of temperature, dryness, defectiveness, and air volume of hot air applied to a point of the electrode substrate at a particular point of the electrode substrate by each time point when the electrode substrate is being dried. For example, the data processing part may determine the operation of the control part so that if the defectiveness measured by the sensor part at one end portion of the electrode substrate at a particular drying time is outside the reference value, the electrode surface is determined to be defective due to over-drying, and may lower a plate spaced upwardly from the one end portion of the electrode substrate so that the plate is positioned to contact the electrode substrate, or to press the electrode substrate with the plate. In another example, the data processing part may determine that, if the sensor part determines that the deviation of the dryness measured at one end portion of the electrode substrate from the dryness measured at the center portion at a particular drying time is outside a reference value, the one end portion is over-dried relative to the center portion, and may determine operation of the control part to lower the plate spaced upwardly from the one end portion of the electrode substrate to close the gap between the plate and the electrode substrate to reduce the heat transferred to the electrode substrate.

In a specific example, the plate may be a structure in which the bottom surfaces of the two end portions form a step in the width direction of the electrode substrate, and among the two end portions, the bottom surface of the end facing the center portion of the electrode substrate has a higher position than the bottom surface of the end facing the opposite direction. The electrode substrate to be transferred has a coated part, which is an area on which an electrode composite layer is formed on the electrode current collector, and a non-coated part without an electrode composite layer coexisting, and the coated part is thicker than the non-coated part, so that a step is formed between the coated part and the non-coated part. Therefore, the plate that contacts both the coated part and the non-coated part can be constructed with a step so that a height difference is formed between the bottom surface of the plate that contacts the coated part and the bottom surface of the plate that contacts the non-coated part. When the bottom surface of the plate having the step is divided into an upper bottom surface and a lower bottom surface located at the upper part, the upper bottom surface may correspond to the coated part of the electrode substrate, and the lower bottom surface may correspond to the non-coated part of the electrode substrate.

Meanwhile, the step formed in the plate may correspond to the thickness of the electrode composite layer as a difference in the thickness of the coated part and the non-coated part. Since the thickness of the electrode composite layer typically varies depending on the time of drying, the step of the plate may be formed in a range of ±10% of the thickness of the electrode composite layer, and more preferably in a range of ±5%, considering the thickness of the electrode composite layer at each time of drying that varies depending on the time of drying.

If the plate does not have a step, when the plate presses the end in the width direction of the electrode substrate, due to the thickness difference between the coated part and the non-coated part, the end may not be pressed because the non-coated part does not contact the plate. Therefore, by having a step in the plate, the non-coated region prone to bending can be properly pressurized, so that the bending of the non-coated region can be effectively suppressed.

Meanwhile, it is preferable that the plate having a step has one edge facing the inlet of the drying chamber having a structure that is bent upwardly with a curvature. This can reduce interference with the movement of the electrode substrate by the plate when the plate comes into contact with the electrode substrate being introduced to the drying chamber as described above.

In another specific example, the plate may be a structure having a length of 10 to 100 mm in the width direction of the electrode sheet and a length of 1 to 5 meters in the longitudinal direction of the electrode sheet. If the plate is less than 50 mm in length in the width direction of the electrode sheet, the narrowness of the plate reduces the efficiency of blocking thermal energy such as hot air, infrared and mid-infrared radiation, and if the plate is more than 100 mm in length, it may be difficult to pressurize a localized region of one end of the electrode substrate considering the width of a typical electrode substrate. On the other hand, if the length of the plate is less than 1m in the direction perpendicular to the width direction of the electrode substrate, the efficiency of thermal energy blocking decreases, and if it exceeds 5m, a large load is placed on the cylinder to control the enlarged plate.

Further, the plate may have a thickness ranging from 5 to 50 mm. If the thickness of the plate is less than 5 mm, the plate may bend due to an externally applied impact, and if the thickness is greater than 50 mm, the coupling with the cylinder may be weakened due to the increased weight of the plate.

Further, the plate may be configured by a metal material having a thermal conductivity (Kcal/Min°C) of 20 or less. Since the higher the thermal conductivity of the metal, the better it absorbs thermal energy, so the temperature of the plate may increase under the influence of the high temperature in the drying chamber. In this case, if the plate with a high temperature presses against the electrode substrate or is disposed in close proximity thereto, the surface temperature of the electrode substrate may be increased, which may have the adverse effect of promoting excessive drying. Therefore, preferably, the plate may be composed of stainless steel, which may be classified as various types of stainless steel such as Fe-Cr-Ni-based or Fe-Cr-based based on chemical composition, but is not limited to any particular type.

Further, the plate may be a hollow structure in which a cooling fluid conduit is formed inside through which a cooling fluid flows, wherein one of the n piston rods (where n is an integer greater than or equal to two) is provided with a cooling fluid supply path capable of supplying cooling fluid to the inside of the plate, and the other is provided with a cooling fluid discharge path capable of discharging cooling fluid from the inside of the plate and is coupled to the plate, wherein the cooling fluid conduit may be connected with the cooling fluid supply path and the cooling fluid discharge path. Among the n piston rods (where n is an integer greater than or equal to two), the piston rod provided with the cooling fluid supply path and the piston rod provided with the cooling fluid discharge path may be hollow structures so that the cooling fluid can flow through, and the cooling fluid supply path provided in one piston rod is connected with the cooling fluid conduit of the plate, and the cooling fluid discharge path provided in the other piston rod is also connected with the cooling fluid conduit of the plate so that the cooling fluid can circulate inside the piston rod and inside the plate.

The cooling fluid supply path is connected with a supply pump that provides power to supply cooling fluid, and the cooling fluid discharge path is connected with a discharge pump that provides power to discharge cooling fluid, wherein the supply pump and the discharge pump are composed of a single pump, which can simultaneously perform the two functions of supplying and discharging cooling fluid. Meanwhile, the connection method between the cooling fluid supply path and the supply pump or the connection method between the cooling fluid discharge path and the discharge pump is not limited in any particular way, and various methods can be applied depending on the working environment. When cooling fluid is injected into the plate as described above, the temperature of the plate that has increased inside the chamber can be reduced through heat exchange with the cooling fluid that has been injected into the plate. When the plate whose temperature is lowered by the cooling fluid is located adjacent to the electrode substrate, it can quickly reduce the temperature of the electrode substrate through heat exchange with the electrode substrate having a relatively higher temperature. This allows the temperature of the electrode surface to be controlled to prevent the electrode substrate from over-drying.

Further, the cylinder may be selected from a pneumatic cylinder and a hydraulic cylinder. The pneumatic cylinder utilizes the pressure energy generated by compressing air and converts it into linear motion, while the hydraulic cylinder converts the pressure energy into linear motion when hydraulic oil flows into the piston and the pressure rises due to the load. The hydraulic cylinder has the disadvantages of a relatively slower reaction speed than the pneumatic cylinder, a complex internal structure, and the risk of explosion due to hydraulic oil leakage and the like, but they have the advantages of high precision and strong extrusion force. On the other hand, the pneumatic cylinder is relatively less precise, has a weak extrusion force, but has the advantages of using atmospheric air as an energy source, having fast reaction speed, and having a relatively simple cylinder structure. Preferably, the cylinder is a pneumatic cylinder in view of the fact that the drying process is carried out at a high temperature and that it has a simple structure, so it is easy to install.

Further, the cylinder is capable of moving the piston rod up and down in a range within 100 mm, which means that the stroke of the piston rod coupled to the cylinder is formed within 100 mm. If the stroke of the piston rod exceeds 100 mm, a large pressure is required inside the cylinder, which increases the size of the cylinder.

In another example, an electrode drying device according to the invention further includes an upper trunk including a nozzle mounted in an upper space inside the drying chamber to discharge hot air in a downward direction at a position upwardly spaced from an upper surface of the electrode substrate, and a lower trunk including a nozzle mounted in a lower space inside the drying chamber to discharge hot air in an upward direction at a position downwardly spaced from a lower surface of the electrode substrate. Optionally, it may further include an infrared and/or mid-infrared heater.

Meanwhile, the present invention provides an electrode drying method using the electrode drying device described above.

In the present invention, the foregoing description of the electrode drying device is also applicable to the electrode drying method, and redundant specific descriptions are omitted.

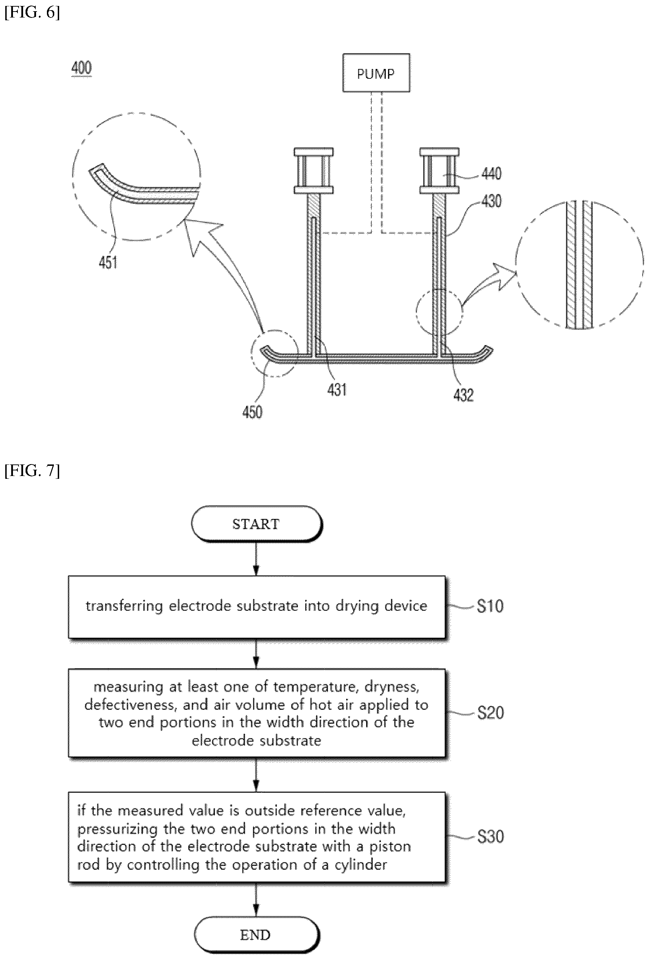

FIG. 7 is a flowchart illustrating the sequence of an electrode drying method according to the present invention. Referring to FIG. 7, the method includes transferring an electrode substrate into a drying device of the present invention (S10); measuring at least one of a temperature, a dryness, a defectiveness, and an air volume of hot air applied to two end portions in the width direction of the electrode substrate (S20); and, if the measured value is outside a reference value, pressurizing the two end portions in the width direction of the electrode substrate with a piston rod by controlling the operation of a cylinder (S30).

In step S10, the electrode drying device is an electrode drying device including a drying chamber having an inlet for receiving electrode substrate on one side and an outlet for discharging electrode substrate on the other side, and a piston rod located inside the drying chamber and extending upwardly and downwardly to pressurize two end portions in the width direction of the electrode substrate. Optionally, the electrode drying device may further include a cylinder for moving the piston rod up and down in the thickness direction of the electrode substrate and a plate coupled to an end of the piston rod facing the electrode substrate and extending in a direction perpendicular to the width direction of the electrode substrate. The electrode substrate is introduced into the drying chamber by a transfer roller, and the electrode substrate is dried by a heat source, such as hot air and/or infrared radiation, located in the drying chamber.

The S20 is a step of measuring at least one of a surface temperature, a dryness, a defectiveness, and an air volume of hot air applied to a point of the electrode substrate being dried, wherein the temperature, dryness, defectiveness, and air volume of hot air applied to the point may be measured by a sensor capable of detecting each or one or more of them. One or more of the sensors may be provided, and may be arranged in a row in a width direction of the electrode substrate on an upper region of the surface of the electrode substrate to detect a surface condition of the two end portions in the width direction of the electrode substrate, and, if necessary, a surface condition of a center portion excluding the two end portions may also be defected.

Meanwhile, the S30 is a step of pressurizing the two end portions in the width direction of the electrode substrate with the piston rod by controlling the cylinder operation if the measurement deviates from the reference value. The reference value may refer to a normal range of temperature, dryness, defectiveness, and air volume of hot air applied to a point of the electrode substrate at a particular point of the electrode substrate by each time point when the electrode substrate is being dried, and if the measured value deviates from the reference value, it may mean that the measured point is over-dried and defects have occurred on the surface. Excessive drying of the electrode substrate may cause bending at two end portions in the width direction of the electrode substrate, which may result in defects such as cracks. Therefore, if the measurement deviates from the reference value, it may be determined that bending has occurred or is about to occur at two end portions of the surface of the electrode substrate, and the piston rod located at the upper region of two end portions of the surface of the electrode substrate may be lowered to pressurize the area of the surface of the electrode substrate where bending has occurred or is about to occur to suppress the electrode substrate from bending.

### [Mode for Carrying out the Invention]

Hereinafter, various forms of electrode drying device and electrode drying method using the same according to the present invention will be described with reference to the drawings.

### (First embodiment)

The present invention provides an electrode drying device according to one embodiment as a first embodiment.

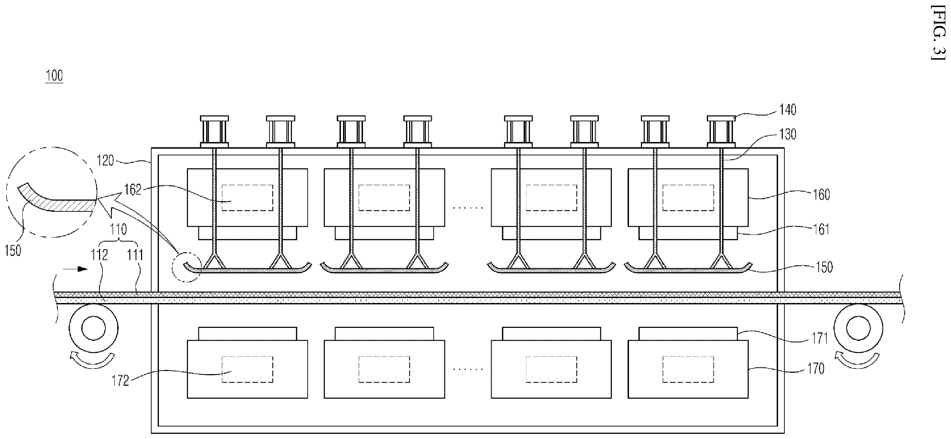

FIG. 2 is a front view illustrating an electrode drying device according to one embodiment of the present invention, and FIG. 3 is a side view illustrating an electrode drying device according to one embodiment of the present invention. Referring to FIGS. 2 to 3, an electrode drying device 100 according to the present invention includes a drying chamber 120 provided with an inlet for introducing an electrode substrate 110 on one side and an outlet for discharging the heat-dried electrode substrate 110 on the other side, an upper trunk 160 including a nozzle 161 mounted in an upper space inside the drying chamber 120 and discharging hot air supplied through a supply air duct 162 in a downward direction at a position spaced upwardly from an upper surface of the electrode substrate 110, and a lower trunk 170 including a nozzle 171 mounted in a lower space inside the drying chamber 120 and discharging hot air supplied via a supply air duct 172 in an upward direction at a position downwardly spaced from the bottom surface of the electrode substrate 110. Meanwhile, the electrode substrate 110 includes a coated part with an electrode composite layer 111 applied on the electrode current collector 112 and a non-coated part without the electrode composite layer 111 applied.

In addition, it further includes a cylinder 140 located outside the drying chamber 120, which is coupled to one end portion of a piston rod 130 extending upwardly and downwardly to press the two end portions b, b' in the width direction of the electrode substrate 110, and which moves the piston rod 130 upwardly and downwardly in the thickness direction of the electrode substrate 110. The cylinder 140 may include a pneumatic cylinder 140 that is not bulky and easy to operate. The cylinder 140 may be coupled to an outer upper surface of the drying chamber 120, and the air pressure generated inside the cylinder 140 may cause the piston rod 130 coupled to the cylinder 140 to perform a straight-line reciprocating piston movement.

Meanwhile, the end at which the piston rod 130 is coupled with the cylinder 140 and the end at which it is located in an opposite direction may be coupled with a plate 150, and the plate 150 may extend in a direction perpendicular to the width direction of the electrode substrate 110 to form a predetermined length. The piston rods 130 may be disposed in a plurality in a direction perpendicular to the width direction of the electrode substrate 110, and the plurality of piston rods 130 may be arranged side by side, but two piston rods 130 arranged in sequence may be coupled with a single plate 150. The greater the number of piston rods 130 coupled to the plate 150, the more rigidly the plate 150 can be constructed with the piston rods 130, which can increase structural stability.

The plate 150 may be constructed of a metal material having a thermal conductivity (Kcal/Min°C) of 20 or less, preferably stainless steel having a thermal conductivity in the range of 13 to 16. A metal having a low thermal conductivity can maintain a relatively low temperature even under the high temperature conditions created by the hot air in the drying chamber 120, thereby preventing the electrode substrate 110 adjacent to the plate 150 from being heated by the plate 150.

The plate 150 has one edge positioned toward the inlet of the drying chamber 120 having a structure that is bent upwardly with a curvature. With the plate 150 having one edge with a plate shape, when the electrode substrate 110 being transferred contacts the plate edge of the plate 150, the electrode substrate 110 is caught by the plate 150, causing interference in the movement of the electrode substrate 110. On the other hand, if one edge of the plate 150 is processed to have a round shape, even if the electrode substrate 110 to be transferred is in contact with the processed plate 150, there is less interference than when the plate 150 having a plate structure is in contact with the electrode substrate 110, and smoother transfer of the electrode substrate 110 is possible. Optionally, the plate 150 may not only have one edge 150 disposed toward the inlet of the drying chamber 120 with a structure bent upwardly, but also the other edge of the plate 150 disposed toward the outlet of the drying chamber 120 may have a structure bent upwardly by having a curvature.

When the electrode substrate 110 is excessively dried, the two end portions b, b' in the width direction of the electrode substrate 110, compared to the center portion a of the electrode substrate 110, may be bent or cracks may occur. At this time, if the occurrence of the bending or cracking of the two end portions b, b' in the width direction of the electrode substrate 110 is detected, the plate 150 disposed on the upper surface of the two end portions b, b' in the width direction of the electrode substrate 110 is lowered so that the plate 150 and the electrode substrate 110 come into contact, and the two end portions b, b' of the electrode substrate 110 being introduced into the drying chamber 120 may be prevented from bending or cracking, and in some cases, the electrode substrate 110 being introduced into the drying chamber 120 with the two end portions b, b' in the width direction of the electrode substrate 110 already bent may be pressed against the plate 150 to force the bent portions to straighten.

Meanwhile, when dividing the drying chamber 120 into k regions (where k is an integer between 10 and 30) based on the direction in which the electrode substrate 110 is transferred, the piston rod 130 may be a structure disposed after a 1/3 point of the k regions forming the drying chamber 120. For example, when dividing the drying chamber 120 into 16 regions in the direction in which the electrode substrate 110 is transferred, by the time the electrode substrate 110 passes through the 6th to 8th region or the 7th to 9th region, the solvent contained in the electrode composite layer 111 may have evaporated to a certain extent, causing the two end portions b, b' in the width direction of the electrode substrate 110 to bend or crack. Therefore, the one or more piston rods 130 are disposed after the 6th to 8th region or the 7th to 9th region where the defect of the electrode substrate 110 occurs, so that when bending occurs in the two end portions b, b' in the width direction of the electrode substrate 110, the plate 150 can use the piston rod 130 coupled thereto to pressurize and force the bent portion to straighten, or, if the two end portions b, b' have not yet been bent, the electrode substrate 110 and the plate 150 can be positioned so that the electrode substrate 110 and the plate 150 are in contact to prevent the electrode substrate 110 from bending even if it is overdried.

### (Second embodiment)

The present invention provides an electrode drying device according to another embodiment as a second embodiment.

The first embodiment is differentiated from the second embodiment in that the first embodiment includes a plate without a step, while the second embodiment includes a plate with a step.

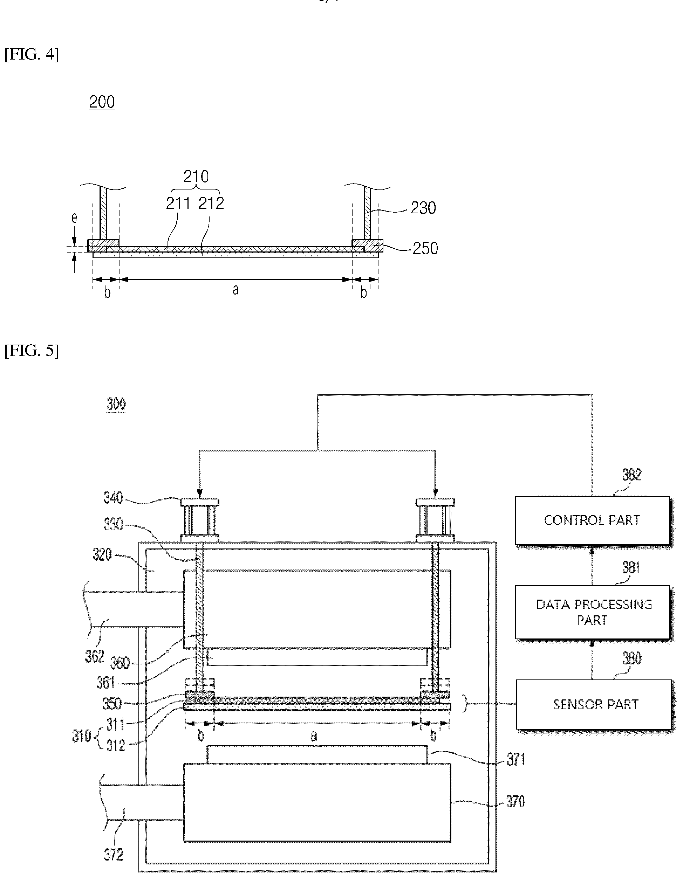

FIG. 4 is a front view showing a plate of an electrode drying device according to another embodiment of the present invention formed with a step. Referring to FIG. 4, the plate 250 of the electrode drying device according to the present invention is coupled to the end of the piston rod 230 in a structure in which the bottom surfaces of two end portions in the width direction of the electrode substrate 210 form a step e, and among the two end portions, the bottom surface of the end facing the center portion a of the electrode substrate 210 has a higher position than the bottom surface of the end facing the opposite direction.

Specifically, the electrode substrate 210 includes a coated part to which the electrode composite layer 211 is applied on the electrode current collector 212 and a non-coated part to which the electrode composite layer 211 is not applied. The center portion a in the width direction of the electrode substrate 210 is composed of the coated part, while the two end portions b, b' in the width direction of the electrode substrate 210 are composed of the non-coated part only, or may be composed of the coated part and the non-coated part. When the bottom surface of the plate 250 having the step e is divided into an upper bottom surface and a lower bottom surface located at the upper part, the upper bottom surface may correspond to the coated part of the electrode substrate 210, and the lower bottom surface may correspond to the non-coated part of the electrode substrate 210.

As in the first embodiment described above, when pressing the end in the width direction of the electrode substrate 210 with the plate 250 in which the step e is not formed, due to the difference in thickness between the coated part and the non-coated part, it may not be pressed because the non-coated part does not contact the plate 250. In order to solve this problem, the present invention has a step e in the plate 250 so that the non-coated region that is prone to bending can be appropriately pressed among the two end portions b, b' in the width direction of the electrode substrate 210 to efficiently suppress the occurrence of bending in the non-coated region.

Meanwhile, the step e formed in the plate 250 may be formed in a range of ±10% relative to the thickness of the electrode composite layer 211, considering the thickness of the electrode composite layer 211 by each time point of drying. Furthermore, the plate 250 having the step e also preferably has one edge positioned toward the inlet of the drying chamber having structure bent upwardly with a curvature. This may reduce interference during movement of the electrode substrate 210 by the plate 250 when the plate 250 comes into contact with the electrode substrate 210 being introduced into the drying chamber as described above.

### (Third embodiment)

The present invention provides an electrode drying device according to another embodiment as a third embodiment.

The first embodiment presents an electrode drying device including a cylinder and a plate. The third embodiment differs from the first embodiment in that the position of the plate is adjusted by controlling the operation of the cylinder by determining whether the cylinder is operated according to the temperature, dryness, etc. of the electrode substrate.

FIG. 5 is a front view illustrating an electrode drying device according to another embodiment of the present invention. Referring to FIG. 5, an electrode drying device 300 according to the present invention includes a drying chamber 320 provided with an inlet for introducing the electrode substrate 310 on one side and an outlet for discharging the heat-dried electrode substrate 310 on the other side, an upper trunk 360 including a nozzle 361 mounted in an upper space inside the drying chamber 320 and discharging hot air supplied through a supply air duct 362 in a downward direction at a position spaced upwardly from an upper surface of the electrode substrate 310, and a lower trunk 370 including a nozzle 371 mounted in a lower space inside the drying chamber 320 and discharging hot air supplied through a supply air duct 372 in an upward direction at a position downwardly spaced from the bottom surface of the electrode substrate 310. The electrode substrate 310 includes a coated part with an electrode composite layer 311 applied on an electrode current collector 312 and a non-coated part without the electrode composite layer 311 applied.

In addition, it further includes a piston rod 330 located inside the drying chamber 320, extending upwardly and downwardly to press against two end portions b, b' in the width direction of the electrode substrate 310, and a cylinder 340 coupled to one end of the piston rod 330 to move the piston rod 330 upwardly and downwardly in the thickness direction of the electrode substrate 310, and a plate 350 coupled to an end of the piston rod facing the electrode substrate and extending in a direction perpendicular to the width direction of the electrode substrate.

Additionally, the electrode drying device 300 according to the invention may further include a control part 382 for controlling the up and down movement of the piston rod 330 by adjusting the pressure inside the cylinder 240 coupled to the piston rod 330. When a pressure target value inside the cylinder 240 or a stroke target value indicative of a range of motion of the piston rod 330 is input, the control part 382 may increase or decrease the pressure inside the cylinder 240 to increase or decrease the stroke of the piston rod 330 in response to the input value.

The electrode substrate 310 may further include a sensor part 380 for measuring one or more of a temperature, dryness, defectiveness, and air volume of hot air applied to the electrode substrate 310. The sensor part 380 may include one or more sensors sensing a target point on an imaginary axis parallel to the width direction of the electrode substrate 310, wherein the one or more sensors may sense one or more of a temperature, dryness, defectiveness, and air volume of hot air applied to the point at a particular point of the two end portions b, b' in the width direction of the electrode substrate 310. The sensor part 380 may quantify the degree from the information detected by the one or more sensors. Optionally, at least one among the temperature, dryness, defectiveness, and air volume of hot air applied to a particular point at the center portion a of the electrode substrate 110 may be detected and measured.

In addition, electrode drying device 300 according to the present invention further includes a data processing part 381 that determines whether the control part 382 operates by receiving at least one among the temperature, dryness, defectiveness, and the air volume of hot air applied to the electrode substrate 310 measured by the sensor part 380. The data processing part 381 is characterized in that it determines whether or not the control part 382 operates when at least one among the temperature, dryness, defectiveness, and air volume of hot air applied to the electrode substrate 310 measured by the sensor part 380 deviates from a reference value. The dryness may be the amount of drying, the drying rate, the defectiveness may mean the degree to which the electrode substrate 310 is bent or the degree to which cracks occur, and the reference value may mean a normal range of temperature, dryness, defectiveness, and air volume of hot air in a particular region of the electrode substrate 310 at different times of drying. As one example, if the defectiveness measured by the sensor portion 380 at the two end portions b or b' in the width direction of the electrode substrate 310 at a particular drying time is outside the reference value, or if the deviation of the dryness measured at the two end portions b, b' in the width direction of the electrode substrate 310 from the dryness measured at the center portion a of the electrode substrate 310 is outside the reference value, it may be determined that the two end portions b, b' of the electrode substrate 310 are overdried, and operation of the control part 382 may be determined to command the piston rod 330 to press or contact the electrode substrate 310.

### (Fourth embodiment)

The present invention provides an electrode drying device according to another embodiment as a fourth embodiment.

The first to third embodiments have a structure in which no hollow is formed inside the plate, but the fourth embodiment is distinguished from the first to third embodiments in that it has a hollow inside the plate, and cooling fluid is introduced into the hollow so that the plate can maintain a low temperature even if the plate is subjected to hot air, and the surface temperature of the electrode substrate in contact with or located adjacent to the plate can be reduced.

FIG. 6 is a side view illustrating a plate of an electrode drying device according to another embodiment of the present invention. Referring to FIG. 6, the electrode drying device 400 of the present invention includes a piston rod 430, a cylinder 440, and a plate 450 coupled to an end of the piston rod 430. The plate 450 of the present invention is a structure in which one edge positioned toward an inlet of the drying chamber is bent upwardly with a curvature, as well as a hollow structure forming a cooling fluid conduit 451 so that a cooling fluid may flow inside the plate 450. The plate 450 having the hollow structure is coupled with two piston rods 430, one of the two piston rods 430 including a cooling fluid supply path 431 capable of supplying cooling fluid to the interior of the plate 450, the other of the two piston rods 430 includes a cooling fluid discharge path 432 capable of discharging cooling fluid inside the plate 450, wherein the cooling fluid conduit 451 is connected with the cooling fluid supply path 431 and the cooling fluid discharge path 432 such that cooling fluid can flow through the cooling fluid conduit 451, the cooling fluid supply path 431 and the cooling fluid discharge path 432.

Meanwhile, a pump is provided to control the flow of cooling fluid, such that cooling fluid may be supplied to the cooling fluid supply path 431 by the pump, or cooling fluid may be discharged from the cooling fluid discharge path 432.

When a cooling fluid is introduced into the interior of the plate 450, the temperature of the plate 450 can be reduced through heat exchange between the plate 450 and the cooling fluid. Since the plate 450 including the cooling fluid maintains a lower temperature than the temperature inside the drying chamber, the plate 450 can be positioned adjacent to the electrode substrate, or positioned so that it abuts it, so that rapid heat exchange can occur between the electrode substrate and the plate 450 to prevent excessive drying of the electrode substrate surface.

The present invention has been described in more detail above with reference to the drawings and embodiments. However, it is to be understood that the configurations shown in the drawings or embodiments described herein are only one embodiment of the invention and do not represent all of the technical ideas of the present invention, and that there may be various equivalents and modifications that may replace them at the time of filing the present disclosure.

### [Reference numerals]

100, 200, 300, 400: ELECTRODE DRYING DEVICE
10, 110, 210, 310: ELECTRODE SUBSTRATE
11, 111, 211, 311: ELECTRODE COMPOSITE LAYER
12, 112, 212, 312: ELECTRODE CURRENT COLLECTOR
120, 320: DRYING CHAMBER
130, 230, 330, 430: PISTON ROD
140, 340, 440: CYLINDER
150, 250, 350, 450: PLATE
160, 360: UPPER TRUNK
161, 171, 361, 371: NOZZLE
162, 172, 362, 372: SUPPLY AIR DUCT
170, 370: LOWER TRUNK
380: SENSOR PART
381: DATA PROCESSING PART
382: CONTROL PART
431: COOLING FLUID SUPPLY PATH
432: COOLING FLUID DISCHARGE PATH
451: COOLING FLUID CONDUIT

## Claims

1. An electrode drying device comprising:
a drying chamber having an inlet for receiving an electrode substrate on one side and an outlet for discharging the electrode substrate on other side; and
a piston rod positioned inside the drying chamber, extending upwardly and downwardly to press against both end portions in a width direction of the electrode substrate.

2. The electrode drying device of claim 1, further comprising:
a cylinder for moving the piston rod up and down in a thickness direction of the electrode substrate.

3. The electrode drying device of claim 1, further comprising:
a plate coupled to an end facing the electrode substrate of the piston rod, and extending in a direction perpendicular to the width direction of the electrode substrate.

4. The electrode drying device of claim 3, wherein
the plate has structure in which an edge on one side facing the inlet of the drying chamber is bent upwardly by having a curvature.

5. The electrode drying device of claim 3, wherein
the piston rod comprises n (n is an integer greater than or equal to 2) piston rods disposed in a direction perpendicular to the width direction of the electrode substrate, wherein the n number of piston rods are arranged in a row.

6. The electrode drying device of claim 1, wherein
based on the direction in which the electrode substrate is being transferred,
when the drying chamber is divided into k (where k is an integer between 10 and 30) regions,
the piston rod is a structure disposed after a 1/3 point of the k regions forming the drying chamber.

7. The electrode drying device of claim 2, further comprising:
a control part for controlling the up and down movement of the piston rod by regulating a pressure inside the cylinder.

8. The electrode drying device of claim 7, further comprising:
a sensor part for measuring at least one among a temperature, a dryness, a defectiveness, and an air volume of hot air applied to the electrode substrate; and
a data processing part configured to receive at least one of a temperature, a dryness, a defectiveness, and an air volume of hot air applied to the electrode substrate measured by the sensor part, and to determine whether the control part operates if at least one of the received temperature, the dryness, the defectiveness, and the air volume of hot air deviates from a reference value.

9. The electrode drying device of claim 3, wherein
the plate is a structure in which bottom surfaces of the two ends form steps in the width direction of the electrode substrate, and wherein
among the two ends, the bottom surface of the end facing the center portion of the electrode substrate is higher than the bottom surface of the end facing the opposite direction.

10. The electrode drying device of claim 3, wherein
the plate has a length in the range of 10 to 100 mm in the width direction of the electrode substrate, and a length in the range of 1 to 5 m in a direction perpendicular to the width direction of the electrode substrate.

11. The electrode drying device of claim 3, wherein
the plate has a thickness in the range of 5 to 50 mm.

12. The electrode drying device of claim 3, wherein
the plate comprises a metal material having a thermal conductivity (Kcal/Min°C) of 20 or less.

13. The electrode drying device of claim 5, wherein
the plate is a hollow structure in which a cooling fluid conduit through which a cooling fluid flows is formed,
one of the n piston rods (where n is an integer greater than or equal to 2) is coupled to the plate, one of which is provided with a cooling fluid supply path configured for supplying cooling fluid to the inside of the plate, and the other of which is provided with a cooling fluid discharge path configured for discharging cooling fluid from the inside of the plate, and wherein
the cooling fluid conduit is a structure connected to a cooling fluid supply path and a cooling fluid discharge path.

14. The electrode drying device of claim 2, wherein
the cylinder is selected from a pneumatic cylinder and a hydraulic cylinder.

15. The electrode drying device of claim 2, wherein
the cylinder is configured to move the piston rod up and down within a range of 100 mm.

16. The electrode drying device of claim 1, further comprising:
an upper trunk including a nozzle mounted in an upper space within the drying chamber and configured to discharge hot air in a downward direction at a position upwardly spaced from the upper surface of the electrode substrate; and
a lower trunk including a nozzle mounted in a lower space within the drying chamber and configured to discharge hot air in an upward direction at a position downwardly spaced from the bottom surface of the electrode substrate.

17. An electrode drying method comprising:
transferring the electrode substrate into the electrode drying device according to claim 1;
measuring at least one of a temperature, a dryness, a defectiveness, and an air volume of hot air applied to the area of both end portions in the width direction of the electrode substrate; and
pressurizing both end portions in the width direction of the electrode substrate with a piston rod by controlling operation of a cylinder if the measurements fall outside a reference value.
